Europäisches Patentamt

European Patent Office

Office européen des brevets

(19)

(11) Publication number: **0 219 772**
**B1**

(12) **EUROPEAN PATENT SPECIFICATION**

(45) Date of publication of patent specification: **07.02.90**

(51) Int. Cl.⁵: **F 02 B 37/12**

(21) Application number: **86113990.5**

(22) Date of filing: **09.10.86**

(54) Turbo compound internal combustion engine.

(30) Priority: **24.10.85 JP 238381/85**

(43) Date of publication of application:
**29.04.87 Bulletin 87/18**

(45) Publication of the grant of the patent:
**07.02.90 Bulletin 90/06**

(84) Designated Contracting States:
**DE FR GB**

(56) References cited:
**CH-A- 363 523**
**DE-A-2 152 520**
**FR-A-2 549 534**
**US-A-2 622 390**
**US-A-4 100 742**
**US-A-4 391 098**

**PATENT ABSTRACTS OF JAPAN, vol. 9, no. 139
(M-387)1862r, 14th June 1985**
**PATENT ABSTRACTS OF JAPAN, vol. 9, no. 206
(M-406)1929r, 23rd August 1985**

(73) Proprietor: **Isuzu Motors Limited
22-10 Minamioi 6-chome Shinagawa-ku
Tokyo (JP)**

(72) Inventor: **Kawamura, Hideo Isuzu Motors Ltd.
Fujisawa Works
8 Tsuchidana Fujisawa-shi
Kanagawa-ken (JP)**

(74) Representative: **Goddar, Heinz J., Dr. et al
FORRESTER & BOEHMERT Widenmayerstrasse
4/I
D-8000 München 22 (DE)**

(56) References cited:

**PATENT ABSTRACTS OF JAPAN, vol. 2, no. 151,
18th December 1978, page 5098 M 78**

Courier Press, Leamington Spa, England.

## Description

The invention relates to an internal combustion engine exhaust energy recovery apparatus according to the first part of claim 1, which is described in US—A—4 391 098.

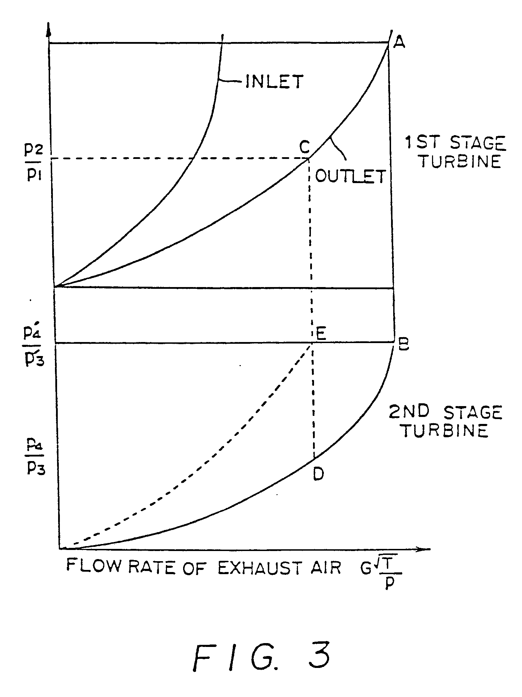

In a turbo-supercharger provided on an internal combustion engine for vehicles, generally, the flow rate of exhaust air at low rotational frequency of the engine (r.p.m.) is insufficient, thus failing to obtain a satisfactory performance. More specifically, as shown in Fig. 3, the ratio of inlet pressure P1 to outlet pressure P2 with respect to the flow rate of exhaust air to the turbo-supercharger varies as shown in the upper portion of Fig. 3. The pressure ratio of inlet pressure P1 and outlet pressure P2 produces a great effect on the efficiency of turbine

$$D = 1 - (P1/P2)^{\frac{K-1}{K}}$$

Accordingly, for the internal combustion engine for a vehicle wherein the flow rate of exhaust air is varied in a wide range, it is very difficult to utilize an exhaust energy for intake supercharging using one and the same (a single) turbine or to recover the energy as a power to a crank shaft.

More specifically, as shown in Fig. 3, at the point A in the high load area having the satisfactory pressure ratio in the turbo-supercharger, the pressure ratio of the recovery turbine can be also maintained to be sufficiently high as shown at the point B. However, in the case where the flow rate of exhaust air is small, the pressure ratio of the turbo-supercharger also lowers as shown at the point C, and in the recovery turbine, the pressure ratio further lowers as indicated at the point D. Thus, in order to increase the pressure ratio of the recovery turbine, it is important to shift the characteristic of the recovery turbine to the point E in Fig. 3.

For fulfilling the aforementioned requirement, it is an object of the present invention to provide an internal combustion engine exhaust energy recovery apparatus according to the first part of claim to increase the pressure ratio of the recovery turbine.

The aforementioned object is achieved by the features of the second part of the claim.

A preferred embodiment of the present invention will be described hereinafter by reference to the drawings, in which:

Fig. 1 is a schematic constructional view of a turbo-compound internal compound engine according to the present invention;

Fig. 2 is a side view in section of a recovery turbine in the turbo-compound internal combustion engine; and

Fig. 3 is a diagram for explaining the operation of the turbo-compound internal combustion engine.

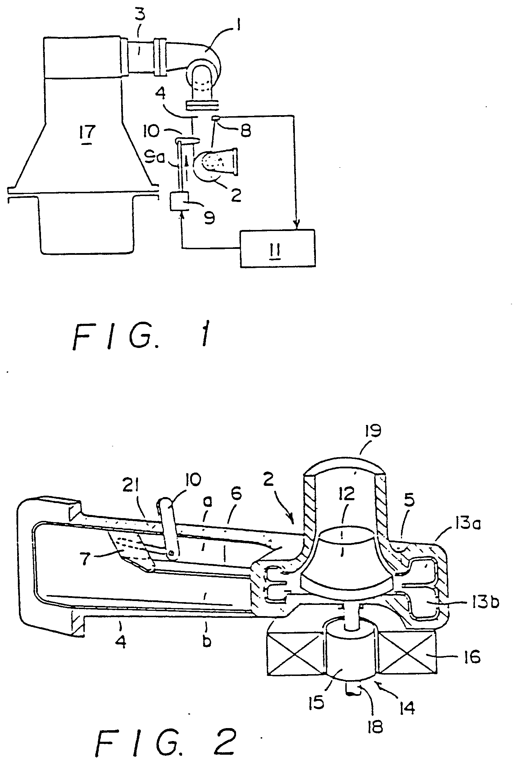

As shown in Fig. 1, a supercharger means 1 is connected to an exhaust pipe 3 of an internal combustion engine 17. The turbine is rotated by the exhaust air supplied to the supercharger means 1 whereby a blower is driven to effect intake supercharging. The exhaust air discharged from the supercharger means 1 is introduced into recovery passages 13a and 13b (Fig. 2) of a turbine housing 2 through a turbine scroll 4, and the air impinges upon a turbine rotor 12 to rotate and drive a shaft 18 thereof and flows toward an exhaust port 19.

According to the present invention, as shown in Fig. 2, the turbine scroll 4 is divided by a partition means 6 into two sections which consist of a scroll passage a and scroll passage b, one scroll passage a having a recovery valve 7 disposed therein. A lever 10 is coupled to a shaft 21 of the recovery valve 7, the lever 10 being driven by means of an electromagnetic actuator 9 shown in Fig. 1 near the turbine rotor 12, the division of the scroll 4 ends in a dividing lip 5. An electric signal of a pressure sensor 8 provided on the inlet of the turbine scroll 4 is input into an electronic controller 11. When this input pressure lowers to a level below a predetermined value, the electromagnetic actuator 9 is excited by the output of the electronic controller 11, and a rod 9a is extended and the scroll passage a is closed by the recovery valve 7. A generator 14 is mounted on a drive shaft 18 of the turbine means 2. That is, a rotor 15 is coupled to the drive shaft 18, and a stator 16 is disposed around the rotor 15. An electric power generated by the generator 14 is supplied to an electric motor connected to the crank shaft of the engine. It is to be noted however that instead of the provision of the generator, an arrangement may be provided so that rotation of the drive shaft 18 of the turbine means 2 is transmitted to the crank shaft of the engine through a gear transmission mechanism. It is to be further noted that the turbine means 2 may be connected to the exhaust pipe 3 and the supercharger means 1 may be connected to the outlet side of the turbine means 2. As rotational frequency of the engine (r.p.m.) increases, the flow rate of exhaust air also increases. When pressure detected by the sensor means 8 exceeds a predetermined value, the rod 9a of the electromagnetic actuator 9 is returned by the force of a spring not shown, and the lever 10 is pivotally moved counter-clockwise in Fig. 2 to open the recovery valve 7. Accordingly, the exhaust air flows from both the scroll passages a and b into the recovery passages 13a and 13b, and the rotational frequency of the turbine rotor 12 and the torque increase. At that time, the inlet pressure of the turbine housing increases, and the pressure ratio P4/P3 increases. Then, the turbine housing 2 comes close to point B in Fig. 3.

When the pressure ratio of the turbine housing 2 increases, the exhaust pressure of the turbine of the supercharger means 1 increases. That is, the pressure ratio increase from P4/P3 to P4/P3, and the inlet pressure of the turbine housing 2 assumes P1−(P1/P2)×P4, which means that the exhaust stroke work of the engine increases by an increased portion of the exhaust pressure. The increase in the amount of work and the increase in efficiency of the turbine housing 2 is in a reciprocal relation. Accordingly, the turbine of the supercharger means may employ a similar construction to that of the turbine housing 2.

**Claim**

An internal combustion engine exhaust energy recovery apparatus comprising:

an engine supercharger means (1) comprising a blower adapted to receive exhaust gases from an engine (17) and to supply intake air thereto;

a recovery turbine rotor (12) adapted for rotation with a drive shaft (18) coupled to the engine;

a recovery turbine housing (2) defining a recovery inlet connected to receive engine exhaust gases discharged by said supercharger means (1); a recovery exhaust port (19) for discharging exhaust gases, a recovery turbine chamber enclosing said recovery turbine rotor (12), and a convoluted recovery passage extending between said recovery inlet and a periphery of said recovery turbine rotor (12);

recovery partition means (6) disposed in said recovery housing (2) and separating said convoluted recovery passage into first and second recovery passages (13a, 13b); and

a recovery valve (7) operable between an open position allowing exhaust gas flow through said first recovery passage (13a) and a closed position producing diversion of exhaust gas into said second recovery passage (13b), characterised in that

each of the first and second recovery passages (13a, 13b) provides communication between said recovery inlet and said periphery of said recovery turbine rotor (12);

the recovery valve (7) is disposed in said first recovery passage (13a); and

in that the apparatus comprises recovery sensor means (8) for sensing the pressure at said recovery inlet, and electrical recovery control means (11) coupled to said recovery valve (7) and said recovery sensor means (8) and operative to control said recovery valve (7) in response to the pressure at said recovery inlet.

**Patentanspruch**

Vorrichtung zur Rückgewinnung der Abgasenergie einer Maschine mit innerer Verbrennung, mit:

—einem Maschinenauflader (1) mit einem Gebläse, das zur Aufnahme der Abgase von der Maschine (17) und zur Zufuhr von Ladeluft zu dieser eingerichtet ist;

—einem Rückgewinnungsturbinenrotor (12), der zur Drehung mit einer an die Maschine gekuppelten Antriebswelle (18) eingerichtet ist;

—einem Rückgewinnungsturbinengehäuse (2), das einen Rückgewinnungseinlaß definiert, der zur Aufnahme der von dem Auflader (1) abgegebenen Maschinenabgase verbunden ist; einem Rückgewinnungsauslaßport (19) zum Auslassen der Abgase, einer Rückgewinnungsturbinenkammer, die den Rückgewinnungsturbinenrotor (12) einschließt, und eine gewündene Rückgewinnungspassage, die sich zwischen dem Rückgewinnungseinlaß und einer Peripherie des Rückgewinnungsturbinenrotors (12) erstreckt;

—Rückgewinnungstrennmittel (6), die in dem Rückgewinnungsgehäuse (2) angeordnet sind und die gewundene Rückgewinnungspassage in eine erste und eine zweite Rückgewinnungspassage (13a, 13b) trennt, und

—ein Rückgewinnungsventil (7), das zwischen einer offenen Position, in der der Abgasstrom durch die erste Rückgewinnungspassage (13a) strömen kann und einer geschlossenen Position, in der eine Abgabe des Abgases in die zweite Rückgewinnungspassage (13b) bewirkt wird, betätigbar ist, dadurch gekennzeichnet, daß

—die erste und die zweite Rückgewinnungspassage (13a, 13b) eine Verbindung zwischen dem Rückgewinnungseinlaß und der Peripherie des Rückgewinnungsturbinenrotors (12) schafft;

—das Rückgewinnungsventil (7) in der ersten Rückgewinnungspassage (13a) angeordnet ist; und

—die Vorrichtung Rückgewinnungssensormittel (8) zum Messen des Drucks an dem Rückgewinnungseinlaß und elektrische Rückgewinnungssteuermittel (11), die mit dem Rückgewinnungsventil (7) und dem Rückgewinnungssensormittel (8) verbunden ist und zur Steuerung des Rückgewinnungsventils (7) auf den Druck an dem Rückgewinnungseinlaß ansprechend betrieben wird, aufweist.

**Revendication**

Appareil de récupération d'énergie d'échappement d'un moteur à combustion interne, comprenant:

—un moyen de suralimentation de moteur (1) comprenant une soufflante agencée pour recevoir des gaz d'échappement d'un moteur (17) et lui fournir de l'air d'admission;

—un rotor (12) de turbine de récupération agencé pour tourner avec un arbre menant (18) accouplé au moteur;

—un carter (2) de turbine de récupération délimitant une entrée de récupération connectée pour recevoir des gaz d'échappement de moteur évacués par ledit moyen de suralimentation (1); un orifice (19) d'échappement de récupération pour évacuer des gaz d'échappement, une chambre de turbine de récupération renfermant le dit rotor (12) de turbine de récupération et un passage de récupération convoluté s'étendant entre la dite entrée de récupération et une périphérie dudit rotor (12) de turbine de récupération;

—un moyen de séparation (6) de récupération disposé dans ledit carter (2) de récupération et séparant ledit passage de récupération convoluté en un premier et un second passages de récupération (13a, 13b); et

—un robinet de récupération (7) actionnable entre une position ouverte permettant l'écoulement de gaz d'échappement par ledit premier passage de récupération (13a) et une position fermée produisant le détournement du gaz d'échappement dans ledit second passage de récupération (13b), caractérisé par le fait que

—chacun des premier et second passages de récupération (13a, 13b) assure la communication entre ladite entrée de récupération et ladite périphérie dudit rotor (12) de turbine de récupération;

—le robinet de récupération (7) est disposé dans ledit premier passage de récupération (13a); et

—l'appareil comprend un moyen capteur de récupération (8) pour détecter la pression à ladite entrée de récupération et un moyen de commande de récupération électrique (11) accouplé au dit robinet de récupération (7) et au dit moyen capteur de récupération (8) et actif pour commander ledit robinet de récupération (7) en réponse à la pression à ladite entrée de récupération.

F I G. 1

F I G. 2

FLOW RATE OF EXHAUST AIR $G\frac{\sqrt{T}}{P}$

FIG. 3